# FASCICULE DE BREVET EUROPEEN

(11) **EP 0 536 056 B1**
(45) Date de publication et mention de la délivrance du brevet: **06.09.1995**
(21) Numéro de dépôt: 92402703.0
(22) Date de dépôt: 30.09.1992
(51) Int. Cl.: H01R 13/52, B60L 11/18, H01H 13/18, B60K 15/04

(54) **Dispositif de prise de charge pour véhicule à moteur électrique**
Ladesteckdose für motorisiertes Elektrofahrzeug
Charging socket device for motorized electrical vehicle

(30) Priorité: 04.10.1991 FR 9112452
(43) Date de publication de la demande: 07.04.1993
(73) Titulaire: AUTOMOBILES PEUGEOT, 75116 Paris (FR); AUTOMOBILES CITROEN, 92200 Neuilly-sur-Seine (FR)
(72) Inventeur: Bouton, Joel, F-95610 Eragny s/Oise (FR)
(74) Mandataire: Boivin, Claude

(56) Documents cités:
- EP-A- 0 415 078
- FR-A- 2 549 886
- US-A- 4 030 322
- US-A- 4 146 825
- US-A- 4 952 160

## Description

Certains véhicules automobiles comportent un moteur électrique alimenté par une batterie embarquée à bord du véhicule voir par ex. le document D1=US-A-4.146 825. Cette batterie doit être rechargée périodiquement et le véhicule comporte, à cet effet, une prise de charge qui peut être placée dans un boîtier étanche; celui-ci est le plus souvent fermé par un couvercle articulé.

La présente invention a pour objet un dispositif de prise de charge qui assure une grande sécurité.

Ce dispositif de prise de charge comporte un dispositif de verrouillage propre à maintenir le couvercle en position fermée et pouvant être commandé de l'intérieur du véhicule et en ce que le couvercle est lié d'une part à des moyens signalant son ouverture au conducteur et d'autre part à des moyens interdisant le démarrage du véhicule lorsqu'il est ouvert.

On a décrit ci-après, à titre d'exemple non limitatif, un mode de réalisation du dispositif de prise de charge selon l'invention, avec référence aux dessins annexés dans lesquels :

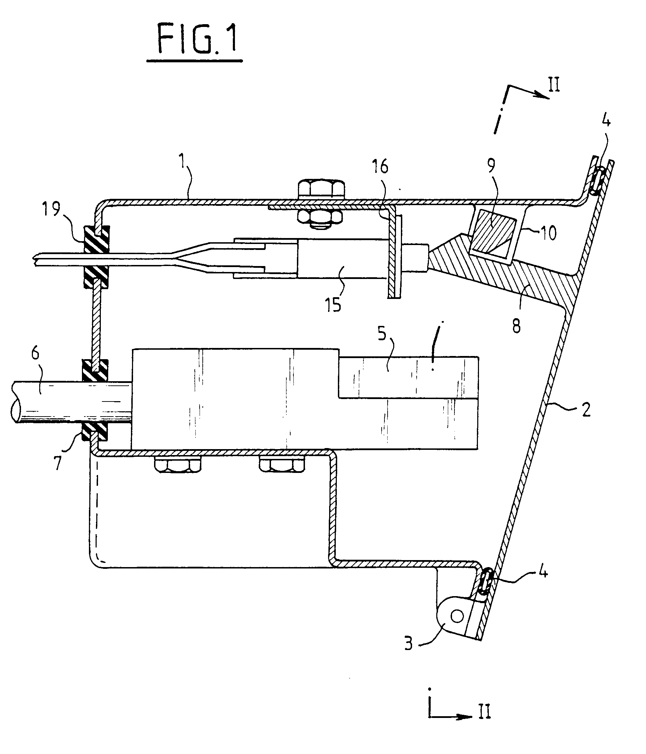

La Figure 1 est une vue en coupe verticale du dispositif;

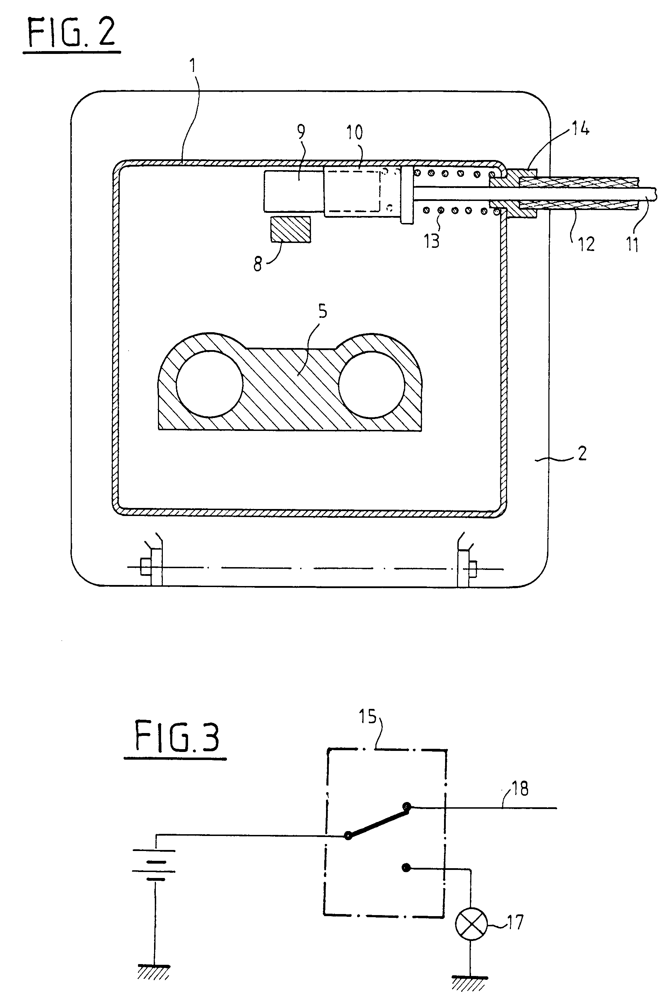

La Figure 2 en est une coupe suivant II-II de la Figure 1;
La Figure 3 est un schéma électrique du contact du dispositif.

Tel qu'il est représenté au dessin, le dispositif de prise de charge comprend un boîtier 1 qui est destiné à être fixé sur la structure d'un véhicule automobile et peut être fermé par un couvercle 2 relié au boîtier par une charnière 3, des joints 4 assurant l'étanchéité quand le couvercle ferme le boîtier.

Dans le boîtier 1 est fixée une prise de charge 5 qui est reliée à des câbles de puissance 6 traversant de manière étanche le boîtier grâce à un passe-fils 7.

Le couvercle 2 est solidaire d'un verrou 8 en forme de crochet et derrière lequel peut s'engager, quand le couvercle est en position de fermeture, un doigt de verrouillage 9 monté mobile dans un logement 10 du boîtier. Le doigt 9 est attelé à l'une des extrémités d'un câble 11 disposé dans une gaine 12. Un ressort 13, interposé entre le doigt 9 et un arrêt de gaine 14 porté par le boîtier, tend à maintenir le doigt dans sa position active dans laquelle il maintient le verrou 8, donc le couvercle 2, en position fermée; l'autre extrémité du câble 11 est reliée à une tirette située à l'intérieur du véhicule sur le tableau de bord.

Un contact 15 est monté mobile dans un support 16 fixé au boîtier 1. Ce contact est soumis à l'action d'un ressort qui tend à l'amener en butée contre le verrou 8. Quand le couvercle 2 est en position d'ouverture, le ressort amène le contact 15 dans une position dans laquelle il ferme le circuit d'alimentation d'un voyant 17 disposé sur le tableau de bord du véhicule. Quand le couvercle est fermé, le contact se trouve dans une position dans laquelle il ferme le circuit d'alimentation 18 du moteur. Les conducteurs du contact 15 traversent de façon étanche le boîtier 1 grâce à un passe-fils 19.

On voit de la description qui précède qu'en temps normal, le couvercle 2 est maintenu en position de fermeture par le doigt de verrouillage 9 et le circuit d'alimentation du moteur du véhicule est sous tension; le véhicule peut démarrer et rouler.

Lorsque le conducteur veut recharger la batterie du véhicule, il actionne la tirette reliée à l'extrémité du câble 11, le doigt 9 libère le verrou 8 et le couvercle 2 libéré s'ouvre sous l'action du ressort du contact 15. Le voyant 17 s'allume, ce qui signale au conducteur l'ouverture du couvercle, et le circuit d'alimentation du moteur est coupé, ce qui empêche le véhicule de démarrer.

## Revendications

1. Dispositif de prise de charge pour véhicule à moteur électrique comprenant une prise de charge (5) qui est placée dans un boîtier étanche (1) pouvant être fermé par un couvercle articulé (2), et qui comporte un dispositif de verrouillage (8-9) propre à maintenir le couvercle (2) en position fermée et pouvant être commandé de l'intérieur du véhicule et en ce que le couvercle (2) est lié d'une part à des moyens signalant son ouverture au conducteur et d'autre part à des moyens interdisant le démarrage du véhicule lorsqu'il est ouvert.

2. Dispositif selon la revendication 1, dont le dispositif de verrouillage du couvercle comporte un verrou (8) en forme de crochet solidaire de ce couvercle et derrière lequel peut s'engager un doigt de verrouillage (9) monté coulissant par rapport au boîtier.

3. Dispositif selon la revendication 2, dont le doigt de verrouillage (9) est relié par un câble (11) à une tirette disposée à l'intérieur du véhicule.

4. Dispositif selon l'une des revendications précédentes, comportant un contact (15) interposé sur le circuit d'alimentation d'un voyant (17) et commandé par le pivotement du couvercle.

5. Dispositif selon les revendications 2 et 4, dont le contact (15) est soumis à l'action d'un ressort qui sert à le presser sur le verrou (8).

6. Dispositif selon l'une des revendications précédentes, comportant un contact (15) interposé sur le circuit d'alimentation du moteur du véhicule et empêchant cette alimentation quand le couvercle est en position d'ouverture.

7. Dispositif selon les revendications 4 et 6, dont le même contact (15) assure l'alimentation du voyant (17) ou du moteur, suivant que le couvercle est ouvert ou fermé.

## Patentansprüche

1. Ladesteckdoseneinrichtung für ein durch einen Elektromotor angetriebenes Fahrzeug mit einer Ladesteckdose (5), die in einem abgedichteten Gehäuse (1) angeordnet ist, das mittels eines schwenkbaren Deckels (2) verschlossen werden kann, und mit einer Verriegelungsvorrichtung (8-9) versehen ist, die dazu geeignet ist, den Deckel (2) in der Geschlossenstellung festzuhalten und aus dem Fahrzeuginneren heraus betätigbar ist, wobei der Deckel (2) einerseits mit Mitteln, die dem Fahrer seine Offenstellung anzeigen, und andererseits mit Mitteln, die das Starten des Fahrzeugs verhindern, solange er offen ist, verbunden ist.

2. Einrichtung nach Anspruch 1, bei welcher die Verriegelungsvorrichtung für den Deckel einen hakenförmigen, fest mit diesem Deckel verbundenen Riegel (8) aufweist und hinter diesen Riegel ein gegenüber dem Gehäuse verschiebbar angeordneter Riegelfinger (9) eingreifen kann.

3. Einrichtung nach Anspruch 2, bei welcher der Riegelfinger (9) über ein Kabel (11) mit einem im Inneren des Fahrzeugs angeordneten Betätigungszug verbunden ist.

4. Einrichtung nach einem der vorhergehenden Ansprüche mit einem Schaltkontakt (15), der in den Speisestromkreis einer Anzeigevorrichtung (17) eingeschaltet und durch das Verschwenken des Deckels betätigbar ist.

5. Einrichtung nach den Ansprüchen 2 und 4, bei welcher der Schaltkontakt (15) der Wirkung einer Feder unterworfen ist, die dazu dient, ihn auf den Riegel (18) zu drücken.

6. Einrichtung nach einem der vorhergehenden Ansprüche mit einem Schaltkontakt (15), der in den Speisestromkreis des Fahrzeugmotors eingeschaltet ist und die Stromzufuhr verhindert, wenn der Deckel sich in der Offenstellung befindet.

7. Einrichtung nach den Ansprüchen 4 und 6, bei welcher der gleiche Schaltkontakt (15) die Stromzufuhr zur Anzeigevorrichtung (17) oder zum Motor steuert, je nachdem, ob der Deckel offen oder geschlossen ist.

## Claims

1. Charging socket device for a vehicle with an electric motor and including a charging socket (5) placed in a sealed box (1) able to be closed by an articulated cover (2), wherein it comprises a locking device (8-9) able to keep the cover (2) in a closed position and be controlled from the inside of the vehicle, and wherein the cover (2) is connected firstly to means informing the driver of its opening and secondly to means prohibiting starting of the vehicle when it is open.

2. Device according to claim 1,
wherein the locking device of the cover comprises a hook-shaped nut (8) integral with said cover and behind which a locking finger is able to be engaged mounted sliding with respect to the box.

3. Device according to claim 2,
wherein the locking finger (9) is connected by a cable (11) to a pull cord disposed inside the vehicle.

4. Device according to any one of the preceding claims and comprising a contact (15) inserted on the feed circuit of an indicator light (17) and controlled by the pivoting of the cover.

5. Device according to claims 2 and 4, wherein the contact (15) is subjected to the action of a spring which is used to press it on the nut (8).

6. Device according to any one of the preceding claims and comprising a contact (15) inserted on the feed circuit of the motor of the vehicle and preventing feeding when the cover is in an opening position.

7. Device according to claims 4 and 6, wherein the same contact (15) ensures feeding of the indicator light (17) or of the motor, depending on whether the cover is open or closed.
